# EUROPÄISCHE PATENTSCHRIFT

(11) **EP 2 494 485 B1**
(45) Veröffentlichungstag und Bekanntmachung des Hinweises auf die Patenterteilung: **02.03.2016**
(21) Anmeldenummer: 10765406.3
(22) Anmeldetag: 28.09.2010
(51) Int. Cl.: G06F 21/00, G07F 7/10, H04W 12/06, H04L 9/32, H04L 29/06, G06K 7/00

(54) **AUTHENTIFIKATION UND DATENINTEGRITÄTSSCHUTZ EINES TOKENS**
AUTHENTICATION OF A TOKEN AND INTEGRITY PROTECTION OF ITS DATA
AUTHENTIFICATION D'UN JETON ET PROTECTION D'INTÉGRITÉ DE SES DONNÉES

(30) Priorität: 29.10.2009 DE 102009051201
(43) Veröffentlichungstag der Anmeldung: 05.09.2012
(73) Patentinhaber: Siemens Aktiengesellschaft, 80333 München (DE)
(72) Erfinder: FALK, Rainer, 85435 Erding (DE)
(86) Internationale Anmeldenummer: PCT/EP2010/064313
(87) Internationale Veröffentlichungsnummer: WO 2011/051064

(56) Entgegenhaltungen:
- WO-A1-01/80479
- WO-A2-2006/134563
- US-A1- 2003 204 743
- US-A1- 2004 222 878
- FINKENZELLER KLAUS: "RFID-Handbuch: Grundlagen und praktische Anwendungen induktiver Funkanlagen, Transponder und kontaktloser Chipkarten: 8. Datensicherheit", RFID HANDBOOK: GRUNDLAGEN UND PRAKTISCHE ANWENDUNGEN, XX, XX, 1. Januar 2002 (2002-01-01), Seiten 225-231, XP002320357,
- MENEZES A ET AL: "OTHER HASH FUNCTION PROPERTIES AND APPLICATIONS, KEYED HASH FUNCTIONS (MACS), DATA INTEGRITY AND MESSAGE AUTHENTICATION, CLASSIFICATION AND FRAMEWORK", 1. Januar 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 330-331,352, XP002525679, ISBN: 978-0-8493-8523-0 Seiten 330-331 Seiten 359-364
- MENEZES ET AL: "Handbook of applied cryptography", 1. Januar 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 400 - 405, XP002143934, ISBN: 978-0-8493-8523-0 Absatz [10.3.2]

## Beschreibung

Die Erfindung betrifft ein Verfahren zur Authentifikation mindestens eines Tokens unter Verwendung eines Challenge-Response-Protokolls und zum Schutz der Datenintegrität von auf dem Token gespeicherten Daten unter Verwendung eines symmetrischen Schlüssels. Weiterhin betrifft die Erfindung ein System mit einer Überprüfungsinstanz zur Authentifikation mindestens eines Tokens unter Verwendung eines Challenge-Response-Protokolls und zum Schutz der Datenintegrität von auf dem Token gespeicherten Daten unter Verwendung eines symmetrischen Schlüssels.

Mit RFID (Radio Frequency Identification) ist es möglich, Etiketten beziehungsweise Tags mit einem Chip auszustatten, der kontaktlos auslesbar ist. RFID-Tags werden vor allem zum Markieren von Waren eingesetzt. Weiterhin können mit RFID-Tags Ausweisdokumente zur Zugangskontrolle und Karten bei Bezahlsystemen ausgestattet werden. Man unterscheidet zwischen aktiven und passiven RFID-Tags. Aktive RFID-Tags besitzen eine eigene Stromversorgung, wohingegen passive RFID-Tags keine eigene Stromversorgung aufweisen. Passive RFID-Tags werden durch ein von einem RFID-Lesegerät ausgestrahltes elektromagnetisches Feld mit Energie versorgt. Üblicherweise weist ein RFID-Tag einen Speicher mit mehreren adressierbaren Speichereinheiten auf. Das RFID-Lesegerät zum Auslesen der auf dem RFID-Tag gespeicherten Daten verfügt über einen vorgegebenen Standardbefehlssatz für den Zugriff auf die Speichereinheiten des RFID-Tags. Mit den beiden Kommandos "Read" und "Write" können Daten des Speicher-RFID-Tags ausgelesen beziehungsweise Daten eingeschrieben werden. Mit diesen herkömmlichen RFID-Tags ist es lediglich möglich, Daten in einen Datenspeicher des RFID-Tags einzuschreiben oder aus dem Datenspeicher auszulesen. Zunehmend werden jedoch auch sensible Daten auf einem RFID-Tag bereit gehalten, wie beispielsweise in elektronischen Reisepässen, Zutrittskontrollkarten oder in Anwendungen für den Plagiatsschutz. Ein unberechtigtes Auslesen der Daten aus einem solchen RFID-Tag ist aus Datenschutz- und Sicherheitsgründen unbedingt zu verhindern. Im Gegensatz zu Datenträgern mit kontaktbehafteten Schnittstellen werden bei RFID-Tags die Daten drahtlos übertragen, so dass insbesondere die Gefahr eines unbemerkten Auslesens von Daten besteht.

Eine Maßnahme zum Schutz vor einem unberechtigten Auslesen ist die beidseitige Authentifikation von RFID-Tag und Lesegerät, um zu vermeiden, dass sich unbemerkt ein unberechtigter Nutzer (oder Angreifer) in die Datenkommunikation einkoppeln und somit sicherheitskritische Daten auslesen kann. Außerdem kann somit gewährleistet werden, dass die gelesenen Daten von einem nicht manipulierten RFID-Tag stammen. In manchen Anwendungsfällen wie z.B. dem Plagiatschutz genügt eine einseitige Authentisierung des RFID-Tags, bei der nur die Echtheit des RFID-Tags durch das Lesegerät geprüft wird.

Zur Echtheitsüberprüfung wird eine Authentifizierungsfunktion, beispielsweise mittels eines sogenannten Challenge-Response-Verfahrens implementiert. Bei einem solchen Challenge-Response-Verfahren wird zur Authentifizierung des RFID-Tags durch das RFID-Lesegerät eine zufällige Challenge generiert und diese an das RFID-Tag gesendet. Das RFID-Tag berechnet seinerseits die zur Challenge gehörende Response mittels eines geheimen Schlüssels und schickt diese Response zurück an das RFID-Lesegerät. Das RFID-Lesegerät prüft anschließend die von dem RFID-Tag erhaltene Response auf deren Korrektheit. Das Challenge-Response-Protokoll ist derart entworfen, dass nur der RFID-Tag, welcher den richtigen geheimen Schlüssel besitzt, die korrekte Response berechnen kann. Einem Angreifer ist es auch nicht möglich, durch Kenntnis von Paaren aus Challenge und dazugehöriger gültiger Response den geheimen Schlüssel zu ermitteln.

Bekannt ist beispielsweise der Origa-Chip von Infineon (www.infineon.com/origa), der das Challenge-Response-Protokoll mit asymmetrischer Kryptographie umsetzt. Hierzu berechnet der Origa-Chip unter Verwendung eines privaten kryptographischen Schlüssels nach Empfang einer Challenge-Nachricht die zugehörige Response-Nachricht. Die Gültigkeit der Response-Nachricht wird unter Verwendung eines zugehörigen öffentlichen Schlüssels durch ein Lesegerät überprüft.

Darüber hinaus besteht ein Bedarf, auf einem derartigen Token gespeicherte Daten manipulationsgeschützt zu übertragen. Allerdings besteht eine wesentliche Randbedingung bei der RFIDbasierten Datenkommunikation darin, dass eine möglichst einfache und möglichst schnelle Datenkommunikation zwischen RFID-Lesegerät und Transponder stattfindet. Dies liegt zum einen daran, dass der Transponder typischerweise nur über geringe Ressourcen, das heißt einerseits über geringe Energieressourcen und andererseits über geringe Speicher- und Rechenressourcen, verfügt, so dass bei einem entsprechenden Protokoll möglichst geringe Datenmengen ausgewertet und möglichst wenig Datenverkehr entstehen sollte. Zum anderen sollte ein derartiges Protokoll auch möglichst schnell durchgeführt werden, da sich vor allem bei dynamischen RFIDbasierten Datenkommunikationssystemen der Transponder sehr häufig nur für eine geringe Zeitspanne im Wirkungsbereich des jeweiligen RFID-Lesegeräts befindet. Innerhalb dieser kurzen Zeit muss eine Datenkommunikationsverbindung aufgebaut werden, diese authentifiziert werden und der manipulationsgeschützte Datenaustausch erfolgen. Die bisher bekannten Lösungen erfordern jedoch aufgrund der rechenintensiven Verschlüsselung und des aufwändigen Schlüsselvereinbarungsprotokolls auf Seiten des RFID-Tags einen relativ großen Hardwareaufwand.

Weiterer Stand der Technik ist US 2003/0204743 und WO 2006/134563.

Vor diesem Hintergrund besteht die Aufgabe der vorliegenden Erfindung darin, ein Verfahren und ein System zur Authentifizierung und zum Datenintegritätsschutz eines Tokens bereitzustellen, welches einerseits eine möglichst hohe Sicherheit gewährleistet und welches hierfür andererseits einen möglichst geringen Hardwareaufwand erfordert.

Diese Aufgabe wird erfindungsgemäß durch ein Verfahren und ein System mit den in den Ansprüchen 1 und 7 angegebenen Merkmalen gelöst. Vorteilhafte Weiterbildungen der Erfindung sind in den abhängigen Ansprüchen angegeben.

Erfindungsgemäß ist ein Verfahren zur Authentifikation mindestens eines Tokens unter Verwendung eines Challenge-Response-Protokolls und zum Schutz der Datenintegrität von auf dem Token gespeicherten Daten unter Verwendung eines symmetrischen Schlüssels vorgesehen. Zunächst wird eine Challenge durch eine Überprüfungsinstanz generiert, welche an das Token drahtgebunden oder drahtlos übermittelt wird. Das Token ermittelt auf Basis der übermittelten Challenge und eines ersten geheimen Schlüssels, welcher dem Token zugeordnet ist, eine Response. Aus der ermittelten Response wird mit einer Schlüsselableitungsfunktion ein symmetrischer Schlüssel abgeleitet. Das Token ermittelt eine Datenintegritätsprüfsumme aus den auf dem Token gespeicherten Daten mit Hilfe des symmetrischen Schlüssels. Die Datenintegritätsprüfsumme wird in einem ersten Prüfzeitfenster und die Response in einem zweiten Prüfzeitfenster an die Überprüfungsinstanz übertragen, so dass das erste Prüfzeitfenster zeitlich früher als das zweite Prüfzeitfenster liegt. Durch die Überprüfungsinstanz wird anhand der Datenintegritätsprüfsumme und der Response das RFID-Tag authentifiziert und die Datenintegrität überprüft. Die Berechnung der zu einer empfangenen Challenge gehörenden Response kann mittels eines asymmetrischem oder auch eines symmetrischen kryptographischen Verfahrens erfolgen

Die der Erfindung zugrunde liegende Idee ist, bei einer Challenge-Response-Authentifizierung aus der Response-Nachricht einen kryptographischen Schlüssel abzuleiten. Dabei wird nach Empfang einer Challenge-Nachricht die zugehörige Response berechnet, aber zunächst noch nicht übertragen. Es wird aus der Response ein kryptographischer Schlüssel abgeleitet, welcher verwendet wird, um eine kryptographische Prüfsumme über Daten zu ermitteln. Die kryptographische Prüfsumme wird in einem ersten Zeitabschnitt nach Empfang der Challenge-Nachricht übertragen. Die Response-Nachricht wird dagegen während eines späteren, zweiten Zeitabschnitts übertragen. Die Gültigkeitsdauer des aus der Response-Nachricht abgeleiteten Schlüssels endet schon, bevor die Response-Nachricht übertragen wird. Einem eventuell vorhandenen Angreifer, der die Kommunikation abhören und manipulieren kann, wird die Response-Nachricht dadurch erst zu einem Zeitpunkt bekannt, zu dem der daraus ableitbare kryptographische Schlüssel schon nicht mehr gültig ist.

In vorteilhafter Weise wird ein sehr einfach realisierbarer Schutz von Daten eines Authentifizierungs-Tokens ermöglicht. Anstatt aufwändig zu realisierender kryptographischer Funktionen, wie beispielsweise einer digitalen Signatur oder eines Sitzungsschlüssel-Vereinbarungs-Protokolls, wird eine kryptographische Prüfsumme ermittelt. Die fehlende kryptographische Funktionalität eines Sitzungsschlüssel-Vereinbarungs-Protokolls wird durch ein definiertes Zeitverhalten ausgeglichen, welches extrem einfach beispielsweise als Digitalschaltung (Zähler) realisierbar ist. Besonders vorteilhaft ist die Erfindung bei einem Authentifizierungsmodul, wie beispielsweise dem Origa-Chip, der durch ein asymmetrisches kryptographisches Verfahren authentifiziert wird, bei dem kein Sitzungsschlüssel bereit gestellt wird und der keine digitale Signatur berechnen kann.

Ein Token oder Security-Token umfasst ohne Beschränkung der Allgemeinheit dieses Begriffs eine Hardwarekomponente, welche zur Authentifizierung eines Nutzers oder eines Gerätes zumindest eine Identifizierungsinformation und/oder eine Sicherheitsinformation speichert. Üblicherweise umfasst diese Identifizierungs-Information eine Benutzeridentität (z.B. Name, Geburtsdatum, Anschrift, Wohnort) bzw. eine Geräteidentität (z.B. Hersteller, Modell/Typ, Versionsinformation, Chargennummer, Seriennummer, Produktionsdatum, Haltbarkeitsdatum). Üblicherweise umfasst diese Sicherheitsinformation ein Geheimnis, wie beispielsweise ein Passwort oder eine PIN oder biometrische Merkmale des Benutzers. Zusammen mit dem Besitz des Tokens wird diese Sicherheitsinformation zur Authentifizierung des Benutzers herangezogen. Das Token ist in unterschiedlichen Formfaktoren realisierbar, beispielsweise als Chipkarte, als USB-Stick oder als Speicherkarte. Weiterhin kann das Token über unterschiedliche Schnittstellen verfügen, welche beispielsweise als Chipkarten-Schnittstelle, USB-Schnittstelle, Speicherkarten-Schnittstelle (SD-Card, MMC-Card) oder als eine drahtlose Schnittstelle ausgebildet sind. Die Schnittstelle kann auch in Form eines Magnetstreifens oder als machine readable zone verfügbar sein.

Das erfindungsgemäße System umfasst eine Überprüfungsinstanz zur Authentifikation mindestens eines Tokens unter Verwendung eines Challenge-Response-Protokolls und zum Schutz der Datenintegrität von auf dem Token gespeicherten Daten unter Verwendung eines symmetrischen Schlüssels, wobei das Token und die Überprüfungsinstanz Mittel geeignet zum Durchführen des erfindungsgemäßen Verfahrens aufweisen.

Nachfolgend wird die Erfindung anhand von Ausführungsbeispielen und den Figuren näher erläutert. Es zeigen:
- Figur 1: eine graphische Darstellung eines erfindungsgemäßen Systems mit einer drahtgebundenen Verbindung zwischen Überprüfungsinstanz und Authentifizierungstoken,
- Figur 2: in einer graphischen Darstellung ein weiteres erfindungsgemäßes System mit einer Verbindung durch ein Netzwerk zwischen einer Überprüfungsinstanz und einem Authentifizierungstoken,
- Figur 3: in einer schematischen Darstellung einen zeitlichen Sendeverlauf von Datenintegritätsprüfsumme und Response,
- Figur 4: ein Ablaufdiagramm eines erfindungsgemäßen Verfahrens.

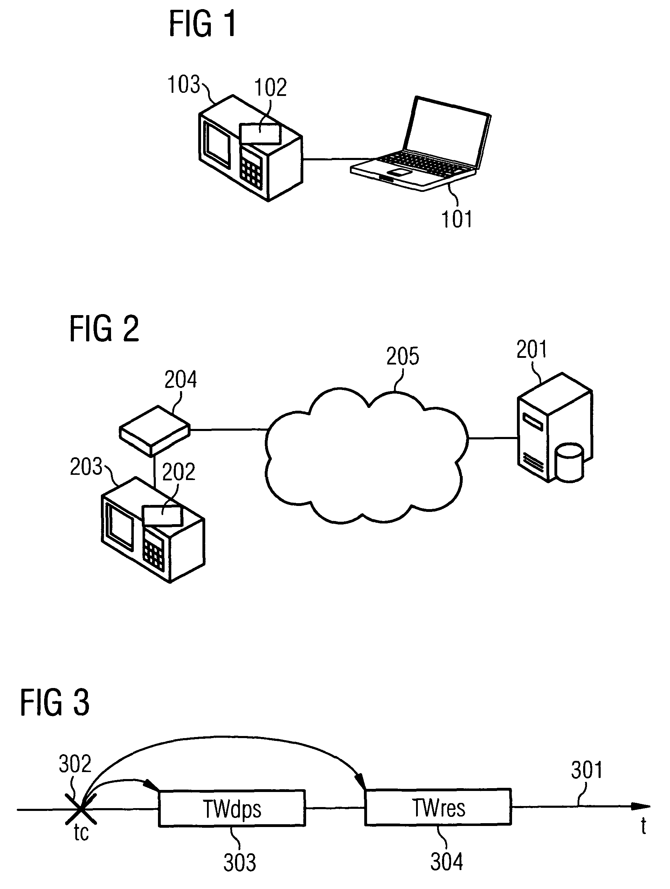

Die Figur 1 zeigt ein erfindungsgemäßes System mit einer drahtgebundenen Verbindung zwischen einer Überprüfungsinstanz und einem Authentifizierungstoken. In diesem Ausführungsbeispiel ist die Überprüfungsinstanz ein Laptop 101, welcher beispielsweise über eine serielle Schnittstelle zumindest mittelbar mit dem Authentifizierungstoken verbunden ist. Das Authentifizierungstoken 102 ist von einem Gerät 103, beispielsweise einer Steuerungsanlage, umfasst und über das Gerät 103 mit dem Laptop 101 verbunden.

Die Figur 2 zeigt ein erfindungsgemäßes System mit einer Verbindung durch ein Netzwerk zwischen einer Überprüfungsinstanz und einem Authentifizierungstoken. Die Überprüfungsinstanz ist ein Rechner 201, der beispielsweise zur Verwaltung von Geräten über einen Fernzugriff (Remote Device Management) eingerichtet ist. Der Rechner 201 ist über ein Netzwerk, beispielsweise das Internet, mit dem Authentifizierungstoken 202 verbunden, welches von einem Gerät 203 umfasst ist. Das Gerät 203 wiederum ist über ein M2M (Machine-to-Machine)- Modul 204 mit dem Netzwerk 205 und damit mit dem Rechner 201 verbunden.

Im Folgenden wird ein Ablauf des erfindungsgemäßen Verfahrens aus Sicht eines Authentifizierungstokens dargestellt.

Im ersten Schritt sendet eine Überprüfungsinstanz eine Challenge-Nachricht an das Authentifizierungstoken, welches daraufhin die zugehörige Response-Nachricht ermittelt.
Ein symmetrischer kryptographischer Schlüssel wird aus der Response durch eine Schlüsselableitungsfunktion (key derivation function) abgeleitet.

Eine derartige Schlüsselableitungsfunktion ist beispielsweise eine kryptographische Hashfunktion wie MD5, SHA1, SHA256 oder eine Funktion zur Berechnung eines Message Authentication Codes wie beispielsweise HMAC-MD5, HMAC-SHA1, HMAC-SHA256, AES-CBC-MAC oder eine CRC-Funktion (Cyclic Redundancy Check). Des Weiteren kann die Identitätsfunktion direkt als Schlüsselableitungsfunktion verwendet werden, also die Response-Nachricht oder ein Teil der Response-Nachricht wird als Schlüssel verwendet. Eine weitere Möglichkeit besteht darin, die Response in mehrere Blöcke aufzuteilen, die miteinander XOR-verknüpft werden. Falls die Response-Nachricht beispielsweise 150 Bit lang ist, so wird diese in drei 50 Bit-Blöcke aufgeteilt. Diese drei Blöcke wiederum werden dann miteinander XOR-verknüpft, um einen 50 Bit langen Schlüssel zu erhalten.

Hiernach wird mit Hilfe des ermittelten kryptographischen Schlüssels eine Prüfsumme von auf dem Authentifizierungstoken gespeicherten Daten durch das Authentifizierungstoken ermittelt. Diese Prüfsumme ist beispielsweise ein Message Authentication Code oder ein Message Integrity Code, z.B. HMAC-MD5, HMAC-SHA1, HMAC-SHA256, AES-CBC-MAC. Die Datenprüfsumme kann weiterhin ermittelt werden, indem die Daten und der Schlüssel als gemeinsame Eingangsdaten einer Prüfsummenfunktion wie beispielsweise MD5, SHA1 oder SHA256 verwendet werden. Die Daten und der Schlüssel werden dann beispielsweise aneinander gehängt oder der Schlüssel wird, nachdem er beispielsweise durch Konkatenation auf die gleiche Länge wie die Daten gebracht wurde, mit den Daten XOR-verknüpft.

Da die Response-Nachricht jedoch ungeschützt übertragen wird, könnte sie ein Angreifer abhören und die Schlüsselableitung ebenfalls durchführen. Mit Kenntnis des abgeleiteten Schlüssels könnte er dann eine Datenintegritätsprüfsumme auf beliebige Daten bilden und als authentische Daten des Authentifizierungstokens ausgeben.

Deshalb erfolgt das Übertragen der Datenintegritätsprüfsumme und der Response-Nachricht zeitlich versetzt nach einem der Überprüfungsinstanz und dem Authentifizierungstoken bekannten Schema. Zunächst wird die Datenintegritätsprüfsumme während eines ersten Zeitfensters nach Empfang einer Challenge-Nachricht übertragen. Anschließend wird während eines zweiten Zeitfensters nach Empfang der Challenge-Nachricht die Response-Nachricht übertragen. Das zweite Zeitfenster liegt dabei überlappungsfrei nach dem ersten Zeitfenster, beispielsweise getrennt durch einen zeitlichen Schutzabstand.

Die Figur 3 veranschaulicht eine zeitliche Abfolge beim Senden von Datenintegritätsprüfsumme und Response. Auf der Zeitachse 301 bezeichnet tc 302 den Zeitpunkt, zu dem die Überprüfungsinstanz die Challenge C an das Authentifizierungstoken überträgt. Das erste Zeitfenster TWdps 303 veranschaulicht den Zeitraum, innerhalb dessen die Datenintegritätsprüfsumme DPS von der Überprüfungsinstanz empfangen werden soll. Das zweite Zeitfenster Twres 304 zeigt den Zeitraum, innerhalb dessen die Response auf die gesendete Challenge von der Überprüfungsinstanz empfangen werden soll.

Im Folgenden wird der Ablauf des erfindungsgemäßen Verfahrens aus Sicht der Überprüfungsinstanz dargestellt.

Die Überprüfungsinstanz erzeugt eine Challenge, beispielsweise eine Pseudo-Zufallszahl, und überträgt diese an das Authentifizierungstoken. Daraufhin empfängt die Überprüfungsinstanz vom Authentifizierungstoken in der beschriebenen zeitlichen Reihenfolge die Datenintegritätsprüfsumme sowie die Response. Falls die Daten der Überprüfungsinstanz nicht bekannt sind, empfängt er auch die Daten.

Anschließend wird durch die Überprüfungsinstanz geprüft, ob die Datenintegritätsprüfsumme während eines ersten Zeitfensters und die Response-Nachricht während eines zweiten Zeitfensters empfangen wurden. Daraufhin wird geprüft, ob die Response-Nachricht gültig ist und ob die Daten der empfangenen Datenintegritätsprüfsumme entsprechen. Falls diese Prüfungen erfolgreich sind, wird die Authentizität des Authentifizierungstokens und der empfangenen Daten des Authentifizierungstokens bestätigt.

Die Daten des Authentifizierungstokens sind beispielsweise unveränderbar auf dem Authentifizierungstoken gespeicherte Daten oder veränderbar auf dem Authentifizierungstoken gespeicherte Daten. Die Daten können auch Sensordaten eines mit dem Authentifizierungstoken verbundenen oder darin integrierten Sensors sein. Weiterhin können die Daten Verbrauchsdaten sein, wie beispielsweise nur einmal überschreibbare Bits für einen Verbrauchszustand oder ein Zähler zur Erfassung eines Energieverbrauchs. Weiterhin können die Daten Zufallsdaten umfassen. So können beispielsweise Nutzdaten um einen zusätzlichen Zufallswert erweitert werden, der durch einen Zufallszahlengenerator des Authentifizierungstokens erzeugt wird. Dies hat den Vorteil, dass die gesamten Daten, über die die Datenintegritätsprüfsumme berechnet wird, von einem Angreifer nicht erraten werden können.

Im Folgenden wird ein weiteres Ausführungsbeispiel des erfindungsgemäßen Verfahrens beschrieben.

Die Überprüfungsinstanz erzeugt eine Challenge-Nachricht, indem eine Zufallszahl Rand ermittelt und mittels einer Hashfunktion H(Rand) die Challenge abhängig von der Zufallszahl Rand ermittelt wird.

Die erzeugte Challenge-Nachricht wird von der Überprüfungsinstanz an das Authentifizierungstoken übertragen. Das Authentifizierungstoken ermittelt die Response und leitet daraus einen kryptographischen Schlüssel ab. Mittels des ermittelten kryptographischen Schlüssels wird eine Datenintegritätsprüfsumme über die hierfür vorgesehenen Daten ermittelt. Sobald die Überprüfungsinstanz das erste Zeitfenster beenden möchte, überträgt sie die Zufallszahl Rand an das Authentifizierungstoken. Auf diese Weise wird dem Authentifizierungstoken mitgeteilt, dass das zweite Zeitfenster beginnt.

Das Authentifizierungstoken prüft, ob die empfangene Zufallszahl Rand zur empfangenen Challenge passt. Hierzu verfügt das Authentifizierungstoken beispielsweise auch über die Hashfunktion H(Rand), mit der anhand der empfangenen Zufallszahl Rand die Challenge generiert werden kann.

Ist die Überprüfung erfolgreich, wird die Response-Nachricht an die Überprüfungsinstanz übertragen. Somit ist sichergestellt, dass erst nach Empfang der Zufallszahl Rand die Response bereit gestellt wird. In vorteilhafter Weise kann die Zufallszahl Rand und damit auch das Startsignal für das zweite Zeitfenster nur durch die Überprüfungsinstanz übertragen werden, welche auch die Zufallszahl Rand und die Challenge erzeugt hat. Ein Angreifer kann aus einer eventuell abgehörten Challenge nicht auf die Zufallszahl Rand rückschließen. Da die Hashfunktion eine so genannte Einwegfunktion ist, kann nämlich nicht praktikabel ein Eingabeparameter (Rand) ermittelt werden, der zu einem bestimmten Ausgabewert (Challenge) führt.

Diese Variante des erfindungsgemäßen Verfahrens hat den Vorteil, dass keine absoluten Zeitangaben eingehalten werden sollen, sondern dass das Ende des Gültigkeitszeitraums des erzeugten kryptographischen Schlüssels durch die Protokollschritte festgelegt wird. Die Überprüfungsinstanz akzeptiert dabei nur eine Datenintegritätsprüfsumme, die sie vor Bekanntgabe der Zufallszahl Rand erhalten hat. Vor Bekanntgabe der Zufallszahl Rand kann kein Außenstehender das Authentifizierungstoken dazu bewegen, die Response-Nachricht und damit indirekt den daraus ableitbaren Schlüssel preiszugeben. Somit ist auch sichergestellt, dass vor Bekanntgabe der Zufallszahl Rand kein Angreifer der Überprüfungsinstanz manipulierte Daten unterschieben kann.

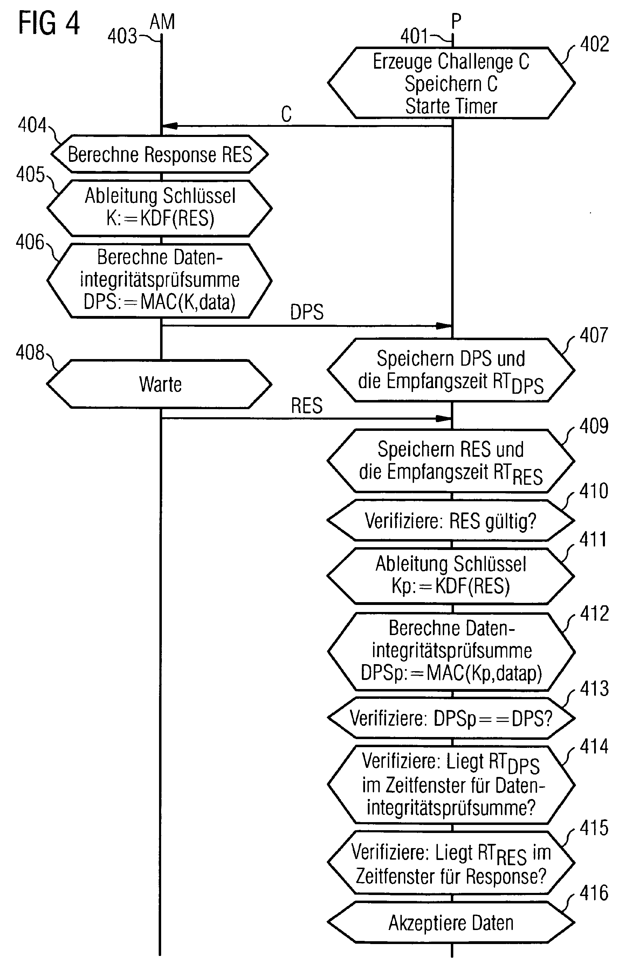

Die Figur 4 zeigt beispielhaft den Ablauf eines erfindungsgemäßen Verfahrens. Eine Überprüfungsinstanz P 401 erzeugt eine Challenge C 402 und überträgt sie an das Authentifizierungstoken AM 403. Die Überprüfungsinstanz startet einen Timer, um ermitteln zu können, mit welcher zeitlichen Verzögerung die beiden erwarteten Nachrichten empfangen werden 402. Alternativ wird der Sendezeitpunkt gespeichert, falls eine Echtzeituhr vorhanden ist. Das Authentifizierungstoken ermittelt mittels eines gespeicherten geheimen Schlüssels die der empfangenen Challenge C zugeordnete Response RES 404. Weiterhin ermittelt das Authentifizierungstoken aus der Response RES einen Schlüssel K 405, mit dem eine Datenintegritätsprüfsumme DPS über Daten des Authentifizierungstokens berechnet wird 406. Die Datenintegritätsprüfsumme DPS wird an die Überprüfungsinstanz übertragen. Dort wird sie gespeichert zusammen mit dem Zeitpunkt des Empfangs 407. Der Zeitpunkt ist beispielsweise bezogen auf den Zeitpunkt des Sendens der Challenge-Nachricht C, wobei der Unterschied zwischen den beiden Zeitpunkten mit Hilfe eines Timers ermittelt wird. Alternativ wird der Empfangszeitpunkt gespeichert, welcher über eine Echtzeituhr bestimmt wird.

Aufgrund von Übertragungsverzögerungen und erforderlichen Berechnungen wird die Nachricht, beispielsweise nach 10 ms, 100 ms oder 1 s nach Senden der Challenge empfangen. Nach einer weiteren Verzögerung, beispielsweise 10 ms, 100 ms, 1 s oder 5 s, überträgt das Authentifizierungstoken AM die Response-Nachricht RES an die Überprüfungsinstanz 408. Dort wird sie gespeichert zusammen mit dem Zeitpunkt des Empfangs 409. Der Zeitpunkt wird wie weiter oben beschrieben ermittelt.

Die Überprüfungsinstanz überprüft nun, ob die Response RES gültig ist 410. Falls ja, leitet die Überprüfungsinstanz daraus den Schlüssel Kp ab 411. Bei einem korrekten Verlauf entspricht der Schlüssel Kp dem Schlüssel K. Daraufhin ermittelt die Überprüfungsinstanz die Datenprüfsumme DPSp 412, für die der Überprüfungsinstanz vorliegenden Daten. Die Daten liegen beispielsweise der Überprüfungsinstanz vor oder wurden vom Authentifizierungstoken abgefragt und ungesichert übertragen. Die Überprüfungsinstanz kontrolliert, ob die ermittelte Datenintegritätsprüfsumme DPSp der empfangenen Datenintegritätssumme DPS entspricht 413. Falls ja, sind die Daten des Authentifizierungstoken und die der Überprüfungsinstanz vorliegenden Daten gleich.

Daraufhin wird überprüft, ob die Datenintegritätsprüfsumme DPS innerhalb des dafür vorgegebenen ersten Zeitfensters empfangen wurde 414. Ebenso wird geprüft, ob die Response RES innerhalb des dafür vorgegebenen zweiten Zeitfensters empfangen wurde 415. Falls alle Überprüfungen erfolgreich durchlaufen werden, gelten die Daten als gültig und nicht manipuliert 416.

Selbstverständlich können die einzelnen Prüfschritte auch in anderer Reihenfolge oder parallel durchlaufen werden.

## Patentansprüche

1. Verfahren zur Authentifikation mindestens eines Tokens, insbesondere RFID Tags, unter Verwendung eines Challenge-Response-Protokolls und zum Schutz der Datenintegrität von auf dem Token gespeicherten Daten unter Verwendung eines symmetrischen Schlüssels mit den Schritten:
(a) Generieren einer Challenge durch eine Überprüfungsinstanz,
(b) Übermitteln der Challenge an das Token,
(c) Ermitteln einer Response durch das Token auf Basis der übermittelten Challenge und eines ersten geheimen Schlüssels, welcher dem Token zugeordnet ist,
wobei
(d) aus der ermittelten Response mit einer Schlüsselableitungsfunktion ein symmetrischer Schlüssel abgeleitet wird,
(e) eine Datenintegritätsprüfsumme aus den gespeicherten Daten mit Hilfe des symmetrischen Schlüssels ermittelt wird,
(f) die Datenintegritätsprüfsumme in einem ersten Prüfzeitfenster und die Response in einem zweiten Prüfzeitfenster an die Überprüfungsinstanz übertragen werden, so dass das erste Prüfzeitfenster zeitlich früher als das zweite Prüfzeitfenster liegt,
(g) durch die Überprüfungsinstanz anhand der Datenintegritätsprüfsumme und der Response das Token authentifiziert und die Datenintegrität überprüft wird.

2. Verfahren nach Anspruch 1, wobei
die Überprüfungsinstanz aus der übertragenen Response mit einer Schlüsselableitungsfunktion einen symmetrischen Schlüssel ableitet,
die Datenintegritätsprüfsumme mit Hilfe des abgeleiteten symmetrischen Schlüssels überprüft wird.

3. Verfahren nach Anspruch 1 oder 2, wobei
die Überprüfungsinstanz überprüft, ob die Datenintegritätsprüfsumme in dem ersten Prüfzeitfenster und die Response in dem zweiten Prüfzeitfenster empfangen wird.

4. Verfahren nach einem der Ansprüche 1 bis 3, wobei das erste Prüfzeitfenster zeitlich vor dem zweiten Prüfzeitfenster abgeschlossen ist.

5. Verfahren nach einem der Ansprüche 1 bis 4, wobei
- die Überprüfungsinstanz eine Zufallszahl ermittelt und die Challenge in Abhängigkeit von der Zufallszahl generiert,
- zum Beenden des ersten Prüfzeitfensters die Zufallszahl durch die Überprüfungsinstanz an das Token übertragen wird,
- die Zufallszahl mit Hilfe der übermittelten Challenge durch das Token überprüft wird,
- bei erfolgreicher Überprüfung die Response in dem zweiten Prüfzeitfenster übertragen wird.

6. Verfahren nach Anspruch 5, wobei
- die Challenge aus der Zufallszahl mit Hilfe einer Hashfunktion generiert wird.

7. System mit einer Überprüfungsinstanz zur Authentifikation mindestens eines Tokens unter Verwendung eines Challenge-Response-Protokolls und zum Schutz der Datenintegrität von auf dem Token gespeicherten Daten unter Verwendung eines symmetrischen Schlüssels,
wobei das Token und die Überprüfungsinstanz Mittel geeignet zum Durchführen eines Verfahrens gemäß einem der Ansprüche 1 bis 6 aufweisen.

## Claims

1. Method for authentication of at least one token, in particular an RFID tag, using a challenge-response protocol and for protection of the integrity of data stored on the token, using a symmetrical key, comprising the steps:
(a) generation of a challenge by a verifying entity,
(b) transmission of the challenge to the token,
(c) determination of a response by the token based on the transmitted challenge and a first secret key assigned to the token,
wherein
(d) from the response determined with a key derivation function, a symmetrical key is derived,
(e) a data integrity checksum is determined from the stored data with the aid of the symmetrical key,
(f) the data integrity checksum is transmitted in a first checking time window and the response is transmitted to the verifying entity in a second checking time window, so that the first checking time window is chronologically earlier than the second checking time window,
(g) on the basis of the data integrity checksum and the response, the verifying entity authenticates the token and checks the data integrity.

2. Method according to claim 1, wherein
the verifying entity derives a symmetrical key from the transmitted response with a key derivation function,
the data integrity checksum is checked with the aid of the derived symmetrical key.

3. Method according to claim 1 or 2, wherein
the verifying entity checks whether the data integrity checksum is received in the first checking time window and the response is received in the second checking time window.

4. Method according to one of the claims 1 to 3, wherein the first checking time window is completed chronologically before the second checking time window.

5. Method according to one of the claims 1 to 4, wherein
- the verifying entity generates a random number and the challenge, depending on the random number,
- in order to end the first checking time window, the random number is transmitted to the token by the verifying entity,
- the random number is checked by the token with the aid of the transmitted challenge,
- in the event of a successful check, the response is transmitted in the second checking time window.

6. Method according to claim 5, wherein
- the challenge is generated from the random number with the aid of a hash function.

7. System comprising a verifying entity for authentication of at least one token using a challenge-response protocol and for protection of the integrity of data stored on the token, using a symmetrical key,
the token and the verifying entity comprising means suitable for carrying out a method according to one of the claims 1 to 6.

## Revendications

1. Procédé destiné à authentifier au moins un jeton, notamment une balise RFID, au moyen d'un protocole défi-réponse et à protéger l'intégrité des données stockées sur le jeton au moyen d'une clé symétrique, comprenant les étapes suivantes :
(a) génération d'un défi par une instance de vérification,
(b) transmission du défi au jeton,
(c) détermination d'une réponse par le jeton sur la base du défi transmis et d'une première clé secrète associée au jeton, dans lequel
(d) à partir de la réponse déterminée, une clé symétrique est obtenue au moyen d'une fonction dérivée,
(e) une somme de contrôle de l'intégrité des données est calculée à partir des données stockées à l'aide de la clé symétrique,
(f) la somme de contrôle de l'intégrité des données est transmise dans une première fenêtre temporelle de contrôle et la réponse dans une seconde fenêtre temporelle de contrôle à l'instance de vérification, de sorte que la première fenêtre temporelle de contrôle est antérieure à la seconde fenêtre temporelle de contrôle,
(g) à l'aide de la somme de contrôle de l'intégrité des données et de la réponse, le jeton est authentifié et l'intégrité des données est vérifiée par l'instance de vérification.

2. Procédé selon la revendication 1, dans lequel
l'instance de vérification obtient à partir de la réponse transmise, au moyen d'une fonction dérivée, une clé symétrique,
la somme de contrôle de l'intégrité des données est vérifiée à l'aide de clé symétrique obtenue.

3. Procédé selon la revendication 1 ou 2, dans lequel l'instance de vérification vérifie que la somme de contrôle de l'intégrité des données est reçue durant la première fenêtre temporelle de contrôle et la réponse durant la seconde fenêtre temporelle de contrôle.

4. Procédé selon l'une des revendications 1 à 3, dans lequel la première fenêtre temporelle de contrôle s'arrête avant la seconde fenêtre temporelle de contrôle.

5. Procédé selon l'une des revendications 1 à 4, dans lequel
- l'instance de vérification détermine un nombre aléatoire et génère le défi en fonction du nombre aléatoire,
- pour arrêter la première fenêtre temporelle de contrôle, le nombre aléatoire est transmis par l'instance de vérification au jeton,
- le nombre aléatoire est vérifié par le jeton à l'aide du défi transmis,
- si la vérification est concluante, la réponse est transmise durant la seconde fenêtre temporelle de contrôle.

6. Procédé selon la revendication 5, dans lequel
- le défi est généré à partir du nombre aléatoire à l'aide d'une fonction de hachage.

7. Système doté d'une instance de vérification, destiné à authentifier au moins un jeton au moyen d'un protocole défi-réponse et à protéger l'intégrité des données stockées sur le jeton au moyen d'une clé symétrique,
le jeton et l'instance de vérification comprenant des moyens aptes à mettre en oeuvre un procédé selon l'une des revendications 1 à 6.
